# EUROPEAN PATENT SPECIFICATION

(11) **EP 1 540 889 B1**
(45) Date of publication and mention of the grant of the patent: **29.11.2006**
(21) Application number: 03795140.7
(22) Date of filing: 01.09.2003
(51) Int. Cl.: H04L 12/28, H04L 29/06

(54) **REAL-TIME RETRY LIMIT - A SYSTEM AND METHOD TO MAXIMIZE THROUGHPUT AND MINIMIZE PACKET LOSS OF WIRELESS LOCAL AREA NETWORKS**
ECHTZEIT - NEUVERSUCHSGRENZE EIN SYSTEM UND VERFAHREN ZUR MAXIMIERUNG DES DURCHSATZES UND ZUR MINIMIERUNG VON PAKETVERLUSTEN DRAHTLOSER LOKALER NETZWERKE
LIMITE DES ESSAIS EN TEMPS REEL - SYSTEME ET PROCEDE PERMETTANT DE MAXIMISER LE DEBIT ET DE MINIMISER LA PERTE DE PAQUETS DE RESEAUX LOCAUX SANS FIL

(30) Priority: 10.09.2002 US 409670 P; 12.12.2002 US 432855 P
(43) Date of publication of application: 15.06.2005
(73) Proprietor: Koninklijke Philips Electronics N.V., 5621 BA Eindhoven (NL)
(72) Inventor: LI, Qiong, Briarcliff Manor, NY 10510-8001 (US); VAN DE SCHAAR, Mihaela, Briarcliff Manor, NY 10510-8001 (US)
(74) Representative: Eleveld, Koop Jan
(86) International application number: PCT/IB2003/003853
(87) International publication number: WO 2004/025902

(56) References cited:
- WO-A-02/13447
- US-A- 5 912 921
- US-B1- 6 393 489
- HEATLEY S ET AL: "Measurements of a transport implementation running over an IEEE 802.3 local area network" COMPUTER NETWORKING SYMPOSIUM, 1988., PROCEEDINGS OF THE WASHINGTON, DC, USA 11-13 APRIL 1988, WASHINGTON, DC, USA,IEEE COMPUT. SOC. PR, US, 11 April 1988 (1988-04-11), pages 34-43, XP010011830 ISBN: 0-8186-0835-8

## Description

### 1. Field of the Invention

This invention relates to packet loss in wireless local area networks (WLANs). More particularly, this invention relates to adjusting the link retry limit to minimize packet loss in WLANs. Most particularly, this invention relates to a system and method for dynamically adapting the wireless link retry limit in real-time according to channel conditions and workload intensity to maximize MAC throughput and minimize packet loss.

### 2. Description of the Related Art

According to present standards, the MAC layer of 802.11b (and a) does not dynamically adapt its retry limit to network conditions. Some commercially available 802.11b wireless interface cards do allow the card driver to reset the MAC's default retry limits (7 for ShortRetryLimit and 4 for LongRetryLimit) to different values to achieve differential protections for different types of traffic. However, there is no retry limit optimization or adaptation provided by these products. Most of the available commercial 802.11b cards simply disable card drivers to modify the MAC's retry limits.

WO02/13447 describes a method and system for adaptive point to multipoint wireless communication. The method and system integrate adaptive and dynamic responsiveness for communication parameters related to multiple characteristics of wireless communication links, both for a single sender and a single receiver, and for sets of multiple senders and multiple receivers. Moreover, the method and system are self-optimizing in the sense that they are adaptively and dynamically responsive to results of attempts to optimize parameters related to multiple characteristics of wireless communication links.

US 6,393,489 discloses a media access controller for transferring data along a computer network. The media access controller includes a transmit media access controller that is configured to process out-going packet data received from an upper layer for transmission to a lower layer. A receive media access controller that is configured to process in-coming packet data received from the lower layer for transmission to the upper layer. If a user desires a particular retry limit, a retry limit register may be programmed.

### SUMMARY OF THE INVENTION

Thus, there is a need for a way to adapt and optimize the MAC's retry limit.

According to the invention a method for adapting a MAC retry limit to transmitting conditions in a wireless local area network as defined in claim 1, and a wireless interface device for use in a wireless local area network as defined in claim 5, are provided.

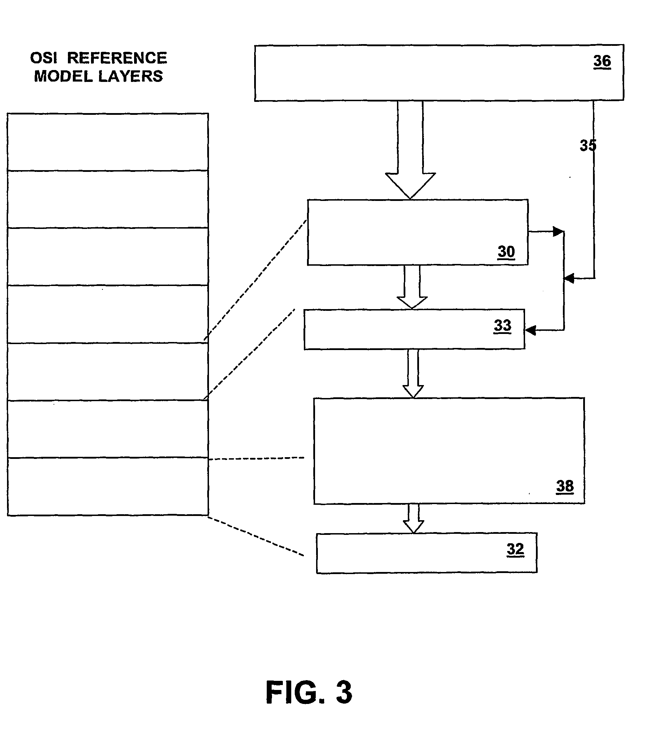

In wireless networking systems, such as 802.11b WLANs, see, e.g., Fig. 3, packet loss can occur for two different reasons:
- Packets are dropped by the interface queue (queue overflow) 30, or
- Packets are dropped by the link when the retry limit is reached 32.

Queue overflow occurs when applications inject traffic into the interface queue at a higher rate than the rate at which the wireless link 32 can deliver this traffic. Link drops occur when the underlying wireless channel conditions (such as bit-error rate) become worse than designed for statistically and, thus, a packet cannot be successfully transmitted over the wireless link even after trying the maximum allowed number of retries determined by the retry limit.

For streaming applications, normally, the RTP/UDP combination is used instead of RTP/TCP for transport control. Unlike TCP, UDP has no inherent flow control mechanism. It is simply an open-loop transport protocol without any feedback for flow control. An application, using UDP, can send the packets into the interface queue at any rate it desires. Streaming applications, especially video streaming, can generate packets at a very high rate, sometimes in bursty patterns. When video streaming applications are deployed over WLANs, the network can easily be overwhelmed either due to temporary bursty traffic or sporadic degradation of the wireless links.

Simulation shows that if the retry limit is fixed, packet loss due to queue drops increase due to one or both of the following reasons:
- high incoming traffic rate, or
- high channel bit-error rate (due to interference, fading, mobility, etc), that increases the lifetime of the packets in the queue, since each packet is retransmitted several times. At some point, however, packet loss due to queue drops becomes the main cause of packet loss in WLANs.

Simulations have also shown that, for a fixed combination of the incoming traffic rate and channel bit-error rate, there exists an optimal setting for the retry limit that can achieve minimum overall packet loss (the sum of both queue and link drops). If workload and channel conditions do not change, then it is only necessary to set the retry limit with a simulated optimal value once, and the WLAN always achieve its best performance in terms of minimizing packet loss.

However in real networks, both workload conditions (including incoming packet rate and pattern) and channel conditions can change over time. There does not exist a fixed optimal retry limit that can be applied to all conditions.

Therefore, a practical way to approach optimality is to dynamically adapt the retry limit in a way that tends to make the retry limit setting approach its optimal value under changing workload and channel conditions.

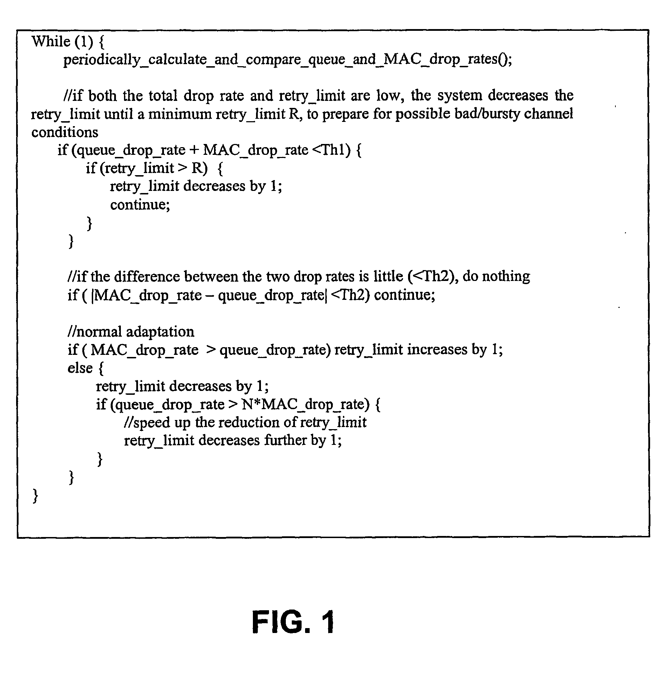

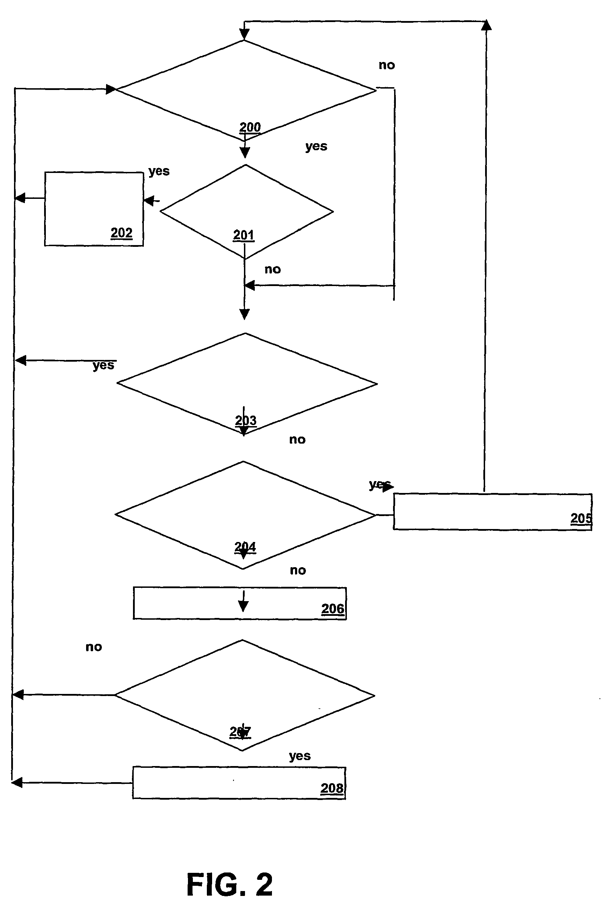

Simulation reveals that when queue drops and link drops are balanced, overall drops are at their minimum. Under certain workload conditions and channel bit-error rates, queue drops monotonically increase with the increase of the setting of the retry limit, while link drops monotonically decrease. This observation leads to a very simple retry limit adaptation algorithm that is a preferred embodiment of the present invention, see Figs. 1 and 2.

The system and method of the present invention can be used by all 802.11a (b) related products, such as network card designs and the implementation of card drivers, or any wireless communication system wherein the wireless link perform error protection by the means of multiple retransmissions.

### BRIEF DESCRIPTION OF THE DRAWINGS

Fig. 1 illustrates C code for a preferred embodiment of the present invention.
Fig. 2 illustrates a flow chart of the C code illustrated in Fig. 1.
Fig. 3 illustrates an implementation of the present invention in a wireless interlace.

### DETAILED DESCRIPTION OF THE PREFERRED EMBODIMENTS

The present invention is an algorithm such that when the queue drop rate is higher than the link drop rate, the retry limit is reduced, otherwise the retry limit is increased.

Using this algorithm, a MAC layer can adapt its retry limit in a way that can track the varying optimal settings corresponding to dynamic network conditions. Simulations show the algorithm minimizes packet loss and maximizes network throughput, achieving much better network performance than without a retry limit adaptation.

The system and method of the present invention continuously measures both interface queue and MAC drop rates, and compares these two rates periodically. In a preferred embodiment, if the queue drop rate is higher than the MAC drop rate, the system and method of the present invention reduces the MAC retry limit by one. If the queue drop rate is smaller than the MAC drop rate, the system and method of the present invention increases the retry limit by one.

A preferred embodiment of a cross-layer algorithm is illustrated in C code in Fig. 1 and in a flow chart of its logic, in Fig.2. This algorithm was developed and fined tuned through simulation. Typical examples for the thresholds used are: Th1=0.0001, R=4, Th2=0.01, N=10. As illustrated in Fig. 3, the interface queue 30 is normally maintained by the operating system (OS) 36 for a networking node and, therefore, the *queue_drop_rate* 35 can by measured within the kernel of the OS 36. The MAC drop rate can be measured by the driver 33 of the wireless network card 38 in the physical layer PHY 32.

The OS 36 passes the *queue_drop_rate* 35 information periodically down to the driver 33, and the driver 33 compares the *queue_drop_rate* 35 with its own measured MAC drop rate, and then sets the MAC retry limit according to the algorithm. At step 200 the driver 33 compares the sum of the OS *queue_drop_rate* and its own measured *MAC_drop_rate* with a first threshold *TH1* to determine if the total drop rate is low. If the comparison at step 200 indicates that the total drop rate is low then the driver 33 compares the *retry_limit* to a lower limit R step 201. If the *retry_limit* is set too high, it is decreased by one at step 202 until the pre-determined minimum retry limit R is reached. The combined testing at steps 200 and 201 are done to prepare for possible bad/bursty channel conditions.

At step 203 it is tested if |*queue_drop_rate* - *MAC_drop_rate*| > Th2, where Th2 is a pre-determined tolerance.

At step 204 through 208, the algorithm attempts to obtain a similar drop rate for the both the interface queue *queue_drop_rate* and MAC *MAC_drop_rate,* since simulation shows that this strategy leads to the minimum packet-loss rate.

The foregoing description of the exemplary embodiment of the invention has been presented for the purposes of illustration and description. It is not intended to be exhaustive or to limit the invention to the precise algorithm disclosed. Many modifications and variations are possible in light of the above teaching. It is intended that the scope of the invention be limited not with this detailed description, but rather by the claims appended hereto.

## Claims

1. A method for adapting a MAC retry limit to transmitting conditions in a wireless local area network, comprising the steps of:
a. initiating the retry limit R to a predetermined value,
**characterized in that** the method comprises the steps of:
b. at a pre-determined frequency, resetting the MAC retry limit according to a comparison of an interface queue drop rate (35) with a MAC drop rate;
c. monitoring the transmitting conditions of the network;
d. based on transmitting conditions of the network, resetting the Mac retry limit in a way to obtain a similar drop rate for the interface queue (30) and the MAC (33); and
e. repeating steps c-d continuously.

2. The method of claim 1, wherein step b further comprises the steps of:
b.1 measuring the interface queue drop rate (35) *queue_drop_rate* for the interface queue (30);
b.2 measuring the MAC drop rate *MAC_drop_rate* for the current value of the MAC retry limit *retry_limit*; and
b.3 if the total drop rate = *queue_drop_rate* + *MAC_drop_rate* <Th1, where Th1 is a pre-determined threshold (200), reducing the retry limit *retry_limit* by 1 unless a pre-determined lower limit R has been reached (202).

3. The method of claim 2, wherein step d further comprises the steps of:
d.1 if |*queue_drop_rate* - *MAC_drop_rate*| > Th2, where Th2 is a pre-determined tolerance (203), performing the substeps of:
d.1.1 if *MAC_drop_rate > queue_drop_rate,* increasing the retry limit *retry_limit* by 1 (205);
d.1.2 if *MAC_drop_rate <queue_drop_rate,* decreasing the retry limit *retry_limit* by 1 (206); and
d.1.3 if *queue_drop_rate* > *N*MAC_drop_rate,* decreasing the retry limit by 1 further, where N is a predetermined positive number (207).

4. The method of claim 3, wherein *Th1* = 0.0001, *R*=4, *Th2*=0.01 and *N*=10.

5. A wireless interface device for use in a wireless local area network, the device comprising a wireless interface driver arranged for adapting a MAC retry limit to transmitting conditions in a wireless local area network, the adapting comprising the steps of:
a. initiating the retry limit R to a predetermined value,
**characterized in that** the adapting comprises the steps of:
b. at a pre-determined frequency, resetting the MAC retry limit according to a comparison of an interface queue drop rate (35) with a MAC drop rate;
c. monitoring the transmitting conditions of the network;
d. based on transmitting conditions of the network, resetting the Mac retry limit in a way to obtain a similar drop rate for the interface queue (30) and the MAC (33); and
e. repeating steps c-d continuously.

6. The device of claim 5, wherein step b further comprises the steps of:
b.1 measuring the interface queue drop rate (35) *queue_drop_rate* for the interface queue (30);
b.2 measuring the MAC drop rate *MAC_drop_rate* for the current value of the MAC retry limit *retry_limit;* and
b.3 if the total drop rate = *queue_drop_rate* + *MAC_drop_rate* <Th1, where Th1 is a pre-determined threshold (200), reducing the retry limit *retry_limit* by 1 unless a pre-determined lower limit R has been reached (202).

7. The device of claim 6, wherein step d further comprises the steps of:
d.1 if |*queue_drop_rate - MAC_drop_rate*| > Th2, where Th2 is a pre-determined tolerance (203), performing the substeps of:
d.1.1 if *MAC_drop_rate > queue_drop_rate,* increasing the retry limit *retry_limit* by 1 (205);
d.1.2 if *MAC_ drop_rate <queue_drop_rate,* decreasing the retry limit *retry_limit* by 1 (206); and
d.1.3 if queue_drop_rate > N*MAC_drop_rate, decreasing the retry limit by 1 further, where N is a predetermined positive number (207).

## Patentansprüche

1. Verfahren zum Anpassen einer MAC-Neuversuchsgrenze an die Übertragungsbedingungen in einem drahtlosen lokalen Netz, die Schritte umfassend:
a. Erstbelegen der Neuversuchsgrenze R mit einem vorgegebenen Wert,
**dadurch gekennzeichnet, dass** das Verfahren die Schritte umfasst:
b. bei einer vorgegebenen Frequenz erneutes Festlegen der MAC-Neuversuchsgrenze entsprechend einem Vergleich einer Schnittstellen-Warteschlangen-Ausfallrate (35) mit einer MAC-Ausfallrate;
c. Überwachen der Übertragungsbedingungen des Netzes;
d. auf Basis der Übertragungsbedingungen des Netzes erneutes Festlegen des MAC-Neuversuchsgrenze derart, dass eine ähnliche Ausfallrate für die Schnittstellen-Warteschlange (30) und den MAC (33) erhalten wird; und
e. fortlaufendes Wiederholen der Schritte c - d.

2. Verfahren nach Anspruch 1, wobei der Schritt b ferner die Schritte umfasst:
b.1 Messen der Schnittstellen-Warteschlangen-Ausfallrate (35) *Warteschlangen-Ausfallrate* für die Schnittstellen-Warteschlange (30);
b.2 Messen der MAC-Ausfallrate *MAC_Ausfallrate* für den aktuellen Wert der MAC-Neuversuchsgrenze *Neuversuchsgrenze;* und
b.3 Herabsetzen der Neuversuchsgrenze *Neuversuchsgrenze* um 1, wenn die Geamtausfallrate = *Warteschlangen_Ausfallrate* + *MAC_Ausfallrate* < Th1, wobei Th1 ein vorgegebener Schwellenwert (200) ist, außer wenn ein vorgegebener unterer Grenzwert R erreicht ist (202).

3. Verfahren nach Anspruch 2, wobei der Schritt d ferner die Schritte umfasst:
d.1 wenn die |*Warteschlangen_Ausfallrate - MAC_Ausfallrate*| > Th2, wobei Th2 eine vorgegebene Toleranz (203) ist, Ausführen der Unterschritte:
d.1.1 Heraufsetzen der Neuversuchsgrenze *Neuversuchsgrenze* um 1 (205), wenn *MAC_Ausfallrate > Warteschlangen_Ausfallrate*;
d.1.2 Herabsetzen der Neuversuchsgrenze *Neuversuchsgrenze* um 1 (206), wenn *MAC_Ausfallrate < Warteschlangen_Ausfallrate*; und
d.1.3 weiteres Herabsetzen der Neuversuchsgrenze um 1, wenn *Warteschlangen_Ausfallrate > N * MAC_Ausfallrate,* wobei N eine vorgegebene positive Zahl ist (207).

4. Verfahren nach Anspruch 3, wobei Th1 = 0,0001; R = 4; Th2 = 0,01 und N=10.

5. Drahtlose Schnittstellenvorrichtung zur Verwendung in einem drahtlosen lokalen Netz, wobei die Vorrichtung einen drahtlosen Schnittstellentreiber umfasst, der zum Anpassen einer MAC-Neuversuchsgrenze an die Übertragungsbedingungen in einem drahtlosen lokalen Netz angeordnet ist, wobei das Anpassen die Schritte umfasst:
a. Erstbelegen der Neuversuchsgrenze R mit einem vorgegebenen Wert,
**dadurch gekennzeichnet, dass** das Verfahren die Schritte umfasst:
b. bei einer vorgegebenen Frequenz erneutes Festlegen der MAC-Neuversuchsgrenze entsprechend einem Vergleich einer Schnittstellen-Warteschlangen-Ausfallrate (35) mit einer MAC-Ausfallrate;
c. Überwachen der Übertragungsbedingungen des Netzes;
d. auf Basis der Übertragungsbedingungen des Netzes erneutes Festlegen des MAC-Neuversuchsgrenze derart, dass eine ähnliche Ausfallrate für die Schnittstellen-Warteschlange (30) und den MAC (33) erhalten wird; und
e. fortlaufendes Wiederholen der Schritte c - d.

6. Vorrichtung nach Anspruch 5, wobei der Schritt b ferner die Schritte umfasst:
b.1 Messen der Schnittstellen-Warteschlangen-Ausfallrate (35) *Warteschlangen_Ausfallrate* für die Schnittstellen-Warteschlange (30);
b.2 Messen der MAC-Ausfallrate *MAC_Ausfallrate* für den aktuellen Wert der MAC-Neuversuchsgrenze *Neuversuchsgrenze;* und
b.3 Herabsetzen der Neuversuchsgrenze *Neuversuchsgrenze* um 1, wenn die Geamtausfallrate = *Warteschlangen_Ausfallrate* + *MAC_Ausfallrate* < Th1, wobei Th1 ein vorgegebener Schwellenwert (200) ist, außer wenn ein vorgegebener unterer Grenzwert R erreicht ist (202).

7. Vorrichtung nach Anspruch 6, wobei der Schritt d ferner die Schritte umfasst:
d.1 wenn die |*Warteschlangen_Ausfallrate - MAC_Ausfallrate*|> Th2, wobei Th2 eine vorgegebene Toleranz (203) ist, Ausführen der Unterschritte:
d.1.1 Heraufsetzen der Neuversuchsgrenze *Neuversuchsgrenze* um 1 (205), wenn *MAC_Ausfallrate > Warteschlangen_Ausfallrate*;
d.1.2 Herabsetzen der Neuversuchsgrenze *Neuversuchsgrenze* um 1 (206), wenn *MAC_Ausfallrate < Warteschlangen_Ausfallrate*; und
d.1.3 weiteres Herabsetzen der Neuversuchsgrenze um 1, wenn *Warteschlangen_Ausfallrate > N * MAC_Ausfallrate,* wobei N eine vorgegebene positive Zahl ist (207).

## Revendications

1. Procédé permettant d'adapter une limite de tentatives du MAC aux conditions de transmission dans un réseau local sans fil, comprenant les étapes suivantes :
a. la fixation initialement de la limite de tentatives R à une valeur prédéterminée ;
**caractérisé en ce que** le procédé comprend les étapes suivantes :
b. à une fréquence prédéterminée, la redéfinition de la limite de tentatives du MAC en fonction d'une comparaison d'un taux d'élimination de la file d'attente d'interface (35) à un taux d'élimination du MAC ;
c. la surveillance des conditions de transmission du réseau ;
d. sur la base des conditions de transmission du réseau, la redéfinition de la limite de tentatives du MAC de manière à obtenir un taux d'élimination similaire pour la file d'attente de l'interface (30) et le MAC (33), et
e. la répétition en continu des étapes c et d.

2. Procédé suivant la revendication 1, dans lequel l'étape b comprend en outre les étapes suivantes :
b.1 la mesure du taux d'élimination de la file d'attente d'interface (35) queue_drop_rate pour la file d'attente d'interface (30) ;
b.2 la mesure du taux d'élimination du MAC MAC_drop_rate pour la valeur instantanée de la limite de tentatives du MAC retry_limit, et
b.3 si le taux d'élimination total = queue_drop_rate + MAC_drop_rate < Th1, où Th1 est un seuil prédéterminé (200), la réduction de la limite de tentatives retry_limit de 1 sauf si une limite inférieure R prédéterminée a été atteinte (202).

3. Procédé suivant la revendication 2, dans lequel l'étape d comprend en outre les étapes suivantes :
d.1 si |queue_drop_rate - MAC_drop_rate| > Th2, où Th2 est une tolérance prédéterminée (203), l'exécution des sous-étapes suivantes :
d.1.1 si MAC_drop_rate > queue_drop_rate, l'augmentation de la limite de tentatives retry_limit de 1 (205) ;
d.1.2 si MAC_drop_rate < queue_drop_rate, la diminution de la limite de tentatives retry_limit de 1 (206), et
d.1.3 si queue_drop_rate > N*MAC_drop_rate, la diminution de la limite de tentatives de 1 une nouvelle fois, où N est un nombre positif prédéterminé (207).

4. Procédé suivant la revendication 3, dans lequel Th1=0,0001, R=4, Th2=0,01 et N=10.

5. Dispositif d'interface sans fil destiné à être utilisé dans un réseau local sans fil, le dispositif comprenant un pilote d'interface sans fil à même d'adapter une limite de tentatives du MAC aux conditions de transmission dans un réseau local sans fil, l'adaptation comprenant les étapes suivantes :
a. la fixation initialement de la limite de tentatives R à une valeur prédéterminée ;
**caractérisé en ce que** l'adaptation comprend les étapes suivantes :
b. à une fréquence prédéterminée, la redéfinition de la limite de tentatives du MAC en fonction d'une comparaison du taux d'élimination de la file d'attente d'interface (35) à un taux d'élimination du MAC ;
c. la surveillance des conditions de transmission du réseau ;
d. sur la base des conditions de transmission du réseau, la redéfinition de la limite de tentatives du MAC de manière à obtenir un taux d'élimination similaire pour la file d'attente de l'interface (30) et le MAC (33), et
e. la répétition en continu des étapes c et d.

6. Dispositif suivant la revendication 5, dans lequel l'étape b comprend en outre les étapes suivantes :
b.1 la mesure du taux d'élimination de la file d'attente d'interface (35) queue_drop_rate pour la file d'attente d'interface (30) ;
b.2 la mesure du taux d'élimination du MAC MAC_drop_rate pour la valeur instantanée de la limite de tentatives du MAC retry_limit, et
b.3 si le taux d'élimination total = queue_drop_rate + MAC_drop_rate < Th1, où Th1 est un seuil prédéterminé (200), la réduction de la limite de tentatives retry_limit de 1 sauf si une limite inférieure R prédéterminée a été atteinte (202).

7. Dispositif suivant la revendication 6, dans lequel l'étape d comprend en outre les étapes suivantes :
d.1 si |queue_drop_rate - MAC_drop_rate| > Th2, où Th2 est une tolérance prédéterminée (203), l'exécution des sous-étapes suivantes :
d.1.1 si MAC_drop_rate > queue_drop_rate, l'augmentation de la limite de tentatives retry_limit de 1 (205) ;
d.1.2 si MAC_drop_rate < queue_drop_rate, la diminution de la limite de tentatives retry_limit de 1 (206), et
d.1.3 si queue_drop_rate > N*MAC_drop_rate, la diminution de la limite de tentatives de 1 une nouvelle fois, où N est un nombre positif prédéterminé (207).
